(19)

**Europäisches Patentamt**
**European Patent Office**
**Office européen des brevets**

(11) **EP 2 550 559 B1**

(12) **EUROPEAN PATENT SPECIFICATION**

(45) Date of publication and mention
of the grant of the patent:
**29.01.2014 Bulletin 2014/05**

(51) Int Cl.:
***G03B 15/05*** (2006.01)          ***G03B 17/08*** (2006.01)
***H04N 5/232*** (2006.01)

(21) Application number: **11710079.2**

(22) Date of filing: **10.03.2011**

(86) International application number:
**PCT/US2011/027818**

(87) International publication number:
**WO 2011/119336 (29.09.2011 Gazette 2011/39)**

(54) **UNDERWATER CAMERA WITH PRESSURE SENSOR AND UNDERWATER MICROPHONE**

UNTERWASSERKAMERA MIT DRUCKSENSOR UND UNTERWASSERMIKROPHON

APPAREIL DE PHOTO SOUS-MARIN AYANT UN CAPTEUR DE PRESSION ET UN MICROPHONE SOUS-MARIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2010 US 728486**

(43) Date of publication of application:
**30.01.2013 Bulletin 2013/05**

(73) Proprietor: **Intellectual Ventures Fund 83 LLC Las Vegas, NV 89128 (US)**

(72) Inventors:
• **PARULSKI, Kenneth, Alan Rochester, NY 14650-2201 (US)**

• **MADDEN, Thomas, Ethan Rochester, NY 14650-2201 (US)**
• **FREDLUND, John, Randall Rochester, NY 14650-2201 (US)**
• **SPAULDING, Kevin, Edward Rochester, NY 14650-2201 (US)**

(74) Representative: **Carpmaels & Ransford LLP One Southampton Row London WC1B 5HA (GB)**

(56) References cited:
**WO-A2-2005/076736      US-A- 4 999 664**
**US-A- 5 153 622         US-A1- 2004 174 434**
**US-A1- 2005 036 035     US-A1- 2006 114 335**
**US-A1- 2008 151 057     US-A1- 2010 079 589**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

This invention pertains to the field of capturing digital images with an underwater camera, and more particularly to using a pressure sensor to automatically select an underwater photography mode.

**BACKGROUND OF THE INVENTION**

Underwater photography is useful for many applications. For example, scuba divers may desire to take photographs as they are exploring coral reefs or shipwrecks, and children may enjoy taking underwater photographs of their friends while they are playing in a swimming pool. To capture underwater photographs, a camera must be enclosed in a watertight housing to prevent water from damaging internal components of the camera.

A characteristic of photographs captured underwater is that the water can affect various image attributes such as color reproduction, flare, image sharpness and spatial noise (i.e., granularity). The degree to which these image attributes are affected will be a function of many factors including the subject distance, the water depth, the water clarity and whether an electronic flash was used to illuminate the scene. This can cause the image quality of underwater photographs to vary significantly from image-to-image.

When underwater photographs captured with conventional film cameras are printed, they are typically analyzed using a so-called scene balance algorithm to estimate the amount of color balance correction appropriate to correct for any color casts introduced in the captured image during the image capture process. Such scene balance algorithms are generally optimized to correct for the color casts introduced when photographing images in air under various illuminants such as daylight, tungsten or fluorescent. When such algorithms are applied to underwater photographs, they will typically remove some of the color cast induced by the underwater conditions, but typically they will not produce optimal results. Often it is necessary to resort to "hand-balancing" the images to produce the best reproduced images. With conventional optical printing of film, it is not possible to compensate for other artifacts associated with underwater photography such as flare, sharpness loss and higher levels of image noise.

U.S. Patent 6,263,792 to Fredlund, entitled "Method and apparatus for printing digital images," discloses a method for printing a roll of film, where at least one image was captured underwater. The photographs captured underwater are identified, either by analyzing the images or by reading information received from the customer. The underwater photographs are then modified in a predetermined manner. Disclosed modifications include color balance adjustments, contrast enhancement and image noise suppression. A disadvantage of this approach is that identifying the underwater photographs using customer supplied information can be cumbersome, and the process used to automatically identify underwater images by analyzing the images is prone to misidentification errors.

U.S. Patent 5,382,499 to Keelan et al., entitled "Color reversal photographic elements adapted for underwater photography" discloses a photographic film designed for underwater photography. The patent discloses that the color balance problem in underwater photography arises from the marked attenuation of longer visible wavelength red light transmitted through water. Within each 3 meters of light transmission distance in water approximately half of the red light is absorbed. This results in underwater scenes having a marked cyan color cast, indicative of red light deficiency. The color reversal photographic films of the invention are provided with an improved underwater imaging capability by increasing the speed of the red recording layer unit in relation to the speed of the green recording layer unit. This film can properly correct for the color cast induced by underwater picture-taking conditions only for one particular scene object distance.

U.S. Patent 5,710,947 to Teremy et al., entitled "Pressure sensor control for electrically responsive camera feature," discloses a photographic film camera which includes a pressure sensor. A number of different applications are described for the pressure sensor including a camera wake-up switch, an orientation switch, a film transport counter, a water depth sensor and a camera leakage detector. When the pressure sensor is used as a water depth sensor, a graphical display is provided to indicate the depth.

Digital cameras have become very common and have largely replaced traditional film cameras in almost all areas of photography, including underwater photography. Underwater photography with a digital camera suffers from most of the same problems that are encountered with traditional film cameras such as variations in color reproduction. Some digital cameras, such as the Canon PowerShot SD500 Digital ELPH Camera, include a user-selectable underwater mode which can be used to manually indicate that the camera is being used underwater. The digital camera can then adjust the color reproduction characteristics to account for a typical underwater photography environment. However, remembering to manually select the underwater mode can be cumbersome, and additionally no provision is made for the fact that underwater photography conditions can vary widely from image-to-image.

## SUMMARY OF THE INVENTION

The present invention represents a digital image capture device for use in capturing underwater digital images, comprising:

a watertight housing;
an image sensor for capturing a digital image;
an optical system for imaging a scene onto the image sensor;
a means for sensing a pressure outside the watertight housing; and
a processor arranged to perform the steps of:

determining a sensed pressure;
capturing a digital image of a scene using the image sensor;
using the sensed pressure to determine an indication of whether the digital image capture device is being operated underwater and selecting an underwater photography mode or a normal photography mode accordingly;
processing the captured digital image according to the selected photography mode; and

storing the processed digital image in a processor accessible memory.

The present invention has the advantage that an underwater photography mode can be automatically selected responsive to the sensed pressure without any user intervention.

It has the additional advantage that when the digital camera is operating in the underwater photography mode, the performance of various image processing operations including color correction, sharpening and noise reduction can be automatically adjusted relative to a normal photography mode to account for the characteristics of the underwater photography environment.

It has the further advantage that the color reproduction of the digital image can be automatically adjusted in an underwater photography mode to account for variations in photography conditions as a function of depth and object distance.

## BRIEF DESCRIPTION OF THE DRAWINGS

FIG. 1 is a high-level diagram showing the components of a digital camera system;
FIG. 2 is a flow diagram depicting typical image processing operations used to process digital images in a digital camera;
FIG. 3 illustrates an underwater photography scenario according to the present invention;
FIG. 4 is a diagram illustrating one embodiment of a digital camera according to the present invention;
FIG. 5 is a flowchart showing steps for processing digital images using an underwater photography mode according to the present invention;
FIG. 6 is a flowchart showing a method for providing a user warning when a digital camera is operated at excessive depths; and
FIG. 7 shows a graph illustrating gain factor functions that can be used to adjust the underwater color reproduction according to the present invention.

It is to be understood that the attached drawings are for purposes of illustrating the concepts of the invention and may not be to scale.

## DETAILED DESCRIPTION OF THE INVENTION

In the following description, a preferred embodiment of the present invention will be described in terms that would ordinarily be implemented as a software program. Those skilled in the art will readily recognize that the equivalent of such software can also be constructed in hardware. Because image manipulation algorithms and systems are well known, the present description will be directed in particular to algorithms and systems forming part of, or cooperating more directly with, the system and method in accordance with the present invention. Other aspects of such algorithms and systems, and hardware or software for producing and otherwise processing the image signals involved therewith, not specifically shown or described herein, can be selected from such systems, algorithms, components and elements known in the art. Given the system as described according to the invention in the following materials, software not specifically shown, suggested or described herein that is useful for implementation of the invention is conventional and within the ordinary skill in such arts.

Still further, as used herein, a computer program for performing the method of the present invention can be stored in a computer readable storage medium, which can include, for example; magnetic storage media such as a magnetic disk (such as a hard drive or a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program having instructions for controlling one or more computers to practice the method according to the present invention.

Because digital cameras employing imaging devices and related circuitry for signal capture and processing, and display are well known, the present description will be directed in particular to elements forming part of, or cooperating more directly with, the method and apparatus in accordance with the present invention. Elements not specifically shown or described herein are selected from those known in the art. Certain aspects of the embodiments to be described are provided in software. Given the system as shown and described according to the invention in the following materials, software not specifically shown, described or suggested herein that is useful for implementation of the invention is conventional and within the ordinary skill in such arts.

The invention is inclusive of combinations of the embodiments described herein. References to "a particular embodiment" and the like refer to features that are present in at least one embodiment of the invention. Separate references to "an embodiment" or "particular embodiments" or the like do not necessarily refer to the same embodiment or embodiments; however, such embodiments are not mutually exclusive, unless so indicated or as are readily apparent to one of skill in the art. The use of singular or plural in referring to the "method" or "methods" and the like is not limiting. It should be noted that, unless otherwise explicitly noted or required by context, the word "or" is used in this disclosure in a non-exclusive sense.

The following description of a digital camera will be familiar to one skilled in the art. It will be obvious that there are many variations of this embodiment that are possible and are selected to reduce the cost, add features or improve the performance of the camera.

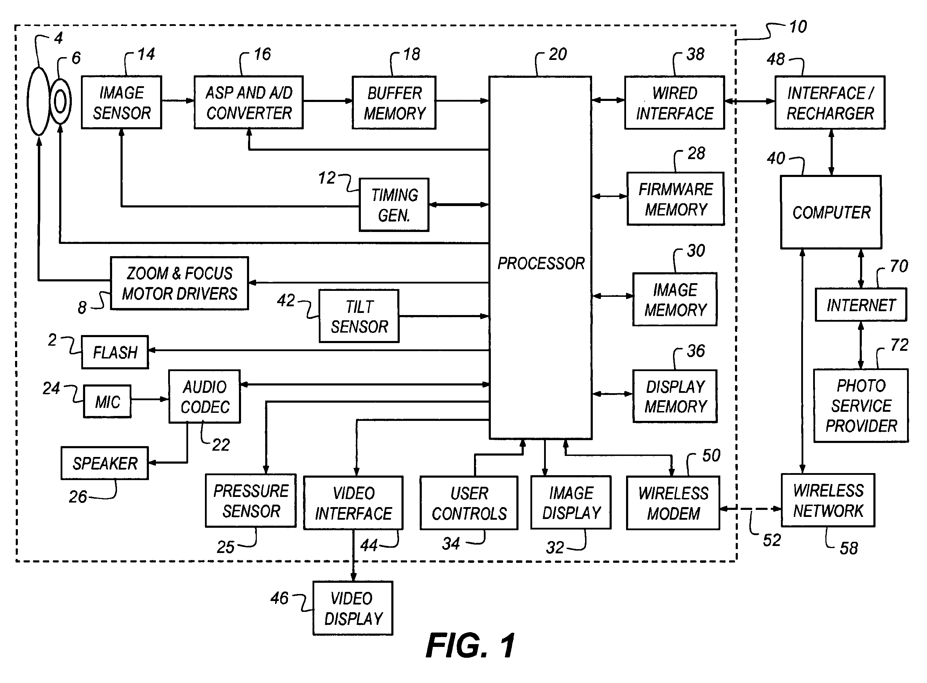

FIG. 1 depicts a block diagram of a digital photography system, including a digital camera 10. Preferably, the digital camera 10 is a portable battery operated device, small enough to be easily handheld by a user when capturing and reviewing images. The digital camera 10 produces digital images that are stored as digital image files using image memory 30. The phrase "digital image" or "digital image file", as used herein, refers to any digital image file, such as a digital still image or a digital video file.

In some embodiments, the digital camera 10 captures both motion video images and still images. The digital camera 10 can also include other functions, including, but not limited to, the functions of a digital music player (e.g. an MP3 player), a mobile telephone, a GPS receiver, or a programmable digital assistant (PDA).

The digital camera 10 includes a lens 4 having an adjustable aperture and adjustable shutter 6. In a preferred embodiment, the lens 4 is a zoom lens and is controlled by zoom and focus motor drives 8. The lens 4 focuses light from a scene (not shown) onto an image sensor 14, for example, a single-chip color CCD or CMOS image sensor. The lens 4 is one type optical system for forming an image of the scene on the image sensor 14. In other embodiments, the optical system may use a fixed focal length lens with either variable or fixed focus.

The output of the image sensor 14 is converted to digital form by Analog Signal Processor (ASP) and Analog-to-Digital (A/D) converter 16, and temporarily stored in buffer memory 18. The image data stored in buffer memory 18 is subsequently manipulated by a processor 20, using embedded software programs (e.g. firmware) stored in firmware memory 28. In some embodiments, the software program is permanently stored in firmware memory 28 using a read only memory (ROM). In other embodiments, the firmware memory 28 can be modified by using, for example, Flash EPROM memory. In such embodiments, an external device can update the software programs stored in firmware memory 28 using the wired interface 38 or the wireless modem 50. In such embodiments, the firmware memory 28 can also be used to store image sensor calibration data, user setting selections and other data which must be preserved when the camera is turned off. In some embodiments, the processor 20 includes a program memory (not shown), and the software programs stored in the firmware memory 28 are copied into the program memory before being executed by the processor 20.

It will be understood that the functions of processor 20 can be provided using a single programmable processor or by using multiple programmable processors, including one or more digital signal processor (DSP) devices. Alternatively, the processor 20 can be provided by custom circuitry (e.g., by one or more custom integrated circuits (ICs) designed specifically for use in digital cameras), or by a combination of programmable processor(s) and custom circuits. It will be understood that connectors between the processor 20 from some or all of the various components shown in FIG. 1 can be made using a common data bus. For example, in some embodiments the connection between the processor 20, the buffer memory 18, the image memory 30, and the firmware memory 28 can be made using a common data bus.

The processed images are then stored using the image memory 30. It is understood that the image memory 30 can be any form of memory known to those skilled in the art including, but not limited to, a removable Flash memory card, internal Flash memory chips, magnetic memory, or optical memory. In some embodiments, the image memory 30 can include both internal Flash memory chips and a standard interface to a removable Flash memory card, such as a Secure Digital (SD) card. Alternatively, a different memory card format can be used, such as a micro SD card, Compact Flash (CF) card, MultiMedia Card (MMC), xD card or Memory Stick.

The image sensor 14 is controlled by a timing generator 12, which produces various clocking signals to select rows and pixels and synchronizes the operation of the ASP and A/D converter 16. The image sensor 14 can have, for example, 12.4 megapixels (4088x3040 pixels) in order to provide a still image file of approximately 4000x3000 pixels. To provide a color image, the image sensor is generally overlaid with a color filter array, which provides an image sensor having an array of pixels that include different colored pixels. The different color pixels can be arranged in many different patterns. As one example, the different color pixels can be arranged using the well-known Bayer color filter array, as described in commonly assigned U.S. Patent 3,971,065, "Color imaging array" to Bayer. As a second example, the different color pixels can be arranged as described in commonly assigned U.S. Patent Application Publication 2007/0024931, filed on February 1, 2007 and titled "Image sensor with improved light sensitivity" to Compton and Hamilton. These examples are not limiting, and many other color patterns may be used.

It will be understood that the image sensor 14, timing generator 12, and ASP and A/D converter 16 can be separately fabricated integrated circuits, or they can be fabricated as a single integrated circuit as is commonly done with CMOS image sensors. In some embodiments, this single integrated circuit can perform some of the other functions shown in FIG. 1, including some of the functions provided by processor 20.

The image sensor 14 is effective when actuated in a first mode by timing generator 12 for providing a motion sequence of lower resolution sensor image data, which is used when capturing video images and also when previewing a still image to be captured, in order to compose the image. This preview mode sensor image data can be provided as HD resolution image data, for example, with 1280x720 pixels, or as VGA resolution image data, for example, with 640x480 pixels, or using other resolutions which have significantly fewer columns and rows of data, compared to the resolution of the image sensor.

The preview mode sensor image data can be provided by combining values of adjacent pixels having the same color, or by eliminating some of the pixels values, or by combining some color pixels values while eliminating other color pixel values. The preview mode image data can be processed as described in commonly assigned U.S. Patent 6,292,218 to Parulski, et al., entitled "Electronic camera for initiating capture of still images while previewing motion images".

The image sensor 14 is also effective when actuated in a second mode by timing generator 12 for providing high resolution still image data. This final mode sensor image data is provided as high resolution output image data, which for scenes having a high illumination level includes all of the pixels of the image sensor, and can be, for example, a 12 megapixel final image data having 4000x3000 pixels. At lower illumination levels, the final sensor image data can be provided by "binning" some number of like-colored pixels on the image sensor, in order to increase the signal level and thus the "ISO speed" of the sensor.

The zoom and focus motor drivers 8 are controlled by control signals supplied by the processor 20, to provide the appropriate focal length setting and to focus the scene onto the image sensor 14. The exposure level of the image sensor 14 is controlled by controlling the f/number and exposure time of the adjustable aperture and adjustable shutter 6, the exposure period of the image sensor 14 via the timing generator 12, and the gain (i.e., ISO speed) setting of the ASP and A/D converter 16. The processor 20 also controls a flash 2 which can illuminate the scene. In some embodiments of the present invention, the flash 2 has an adjustable correlated color temperature. For example, the flash disclosed in U.S. Patent Application Publication 2008/0297027 to Miller et al., entitled "Lamp with adjustable color," can be used to produce illumination having a higher proportion of red light when the digital camera 10 is operated underwater as will be described later.

The lens 4 of the digital camera 10 can be focused in the first mode by using "through-the-lens" autofocus, as described in commonly-assigned U.S. Patent 5,668,597, entitled "Electronic Camera with Rapid Automatic Focus of an Image upon a Progressive Scan Image Sensor" to Parulski et al.. This is accomplished by using the zoom and focus motor drivers 8 to adjust the focus position of the lens 4 to a number of positions ranging between a near focus position to an infinity focus position, while the processor 20 determines the closest focus position which provides a peak sharpness value for a central portion of the image captured by the image sensor 14. The focus distance which corresponds to the closest focus position can then be utilized for several purposes, such as automatically setting an appropriate scene mode, and can be stored as metadata in the image file, along with other lens and camera settings.

An optional tilt sensor 42 can be included for sensing an orientation of the digital camera 10. Tilt sensors are well-known in the art and have been incorporated into many common products such as electronic game systems and cell-phones. Commonly, tilt sensors use an accelerometer to sense changes in the orientation of the device. In one embodiment of the present invention, the tilt sensor 42 provides a signal indicating a tilt angle relative to a horizontal direction. A positive tilt angle can be used to indicate that the camera is tilted upward relative to a horizontal orientation, and a negative tilt angle can be used to indicate that the camera is tilted downward relative to a horizontal orientation.

The processor 20 produces menus and low resolution color images that are temporarily stored in display memory 36 and are displayed on the image display 32. The image display 32 is typically an active matrix color liquid crystal display (LCD), although other types of displays, such as organic light emitting diode (OLED) displays, can be used. A video interface 44 provides a video output signal from the digital camera 10 to a video display 46, such as a flat panel HDTV display. In preview mode, or video mode, the digital image data from buffer memory 18 is manipulated by processor 20 to form a series of motion preview images that are displayed, typically as color images, on the image display 32. In review mode, the images displayed on the image display 32 are produced using the image data from the digital image files stored in image memory 30.

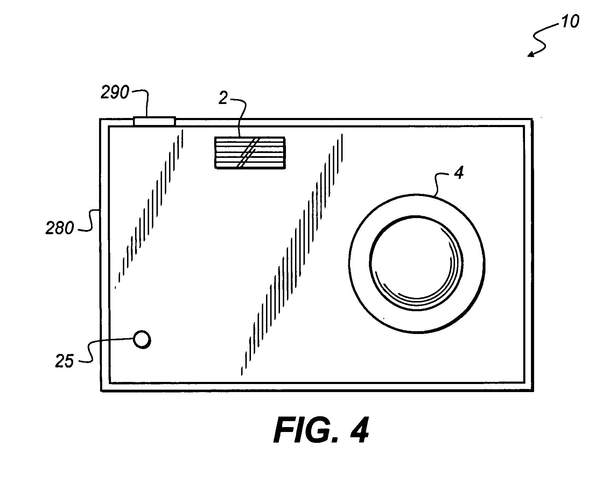

The graphical user interface displayed on the image display 32 is controlled in response to user input provided by user controls 34. The user controls 34 are used to select various camera modes, such as video capture mode, still capture mode, and review mode, and to initiate capture of still images and recording of motion images. In some embodiments, the first mode described above (i.e. still preview mode) is initiated when the user partially depresses a shutter button (e.g., image capture button 290 shown in FIG. 4), which is one of the user controls 34, and the second mode (i.e., still image capture mode) is initiated when the user fully depresses the shutter button. The user controls 34 are also used to turn on the camera, control the lens 4, and initiate the picture taking process. User controls 34 typically include some combination of buttons, rocker switches, joysticks, or rotary dials. In some embodiments, some of the user controls 34 are provided by using a touch screen overlay on the image display 32. In other embodiments, additional status displays or images displays can be used.

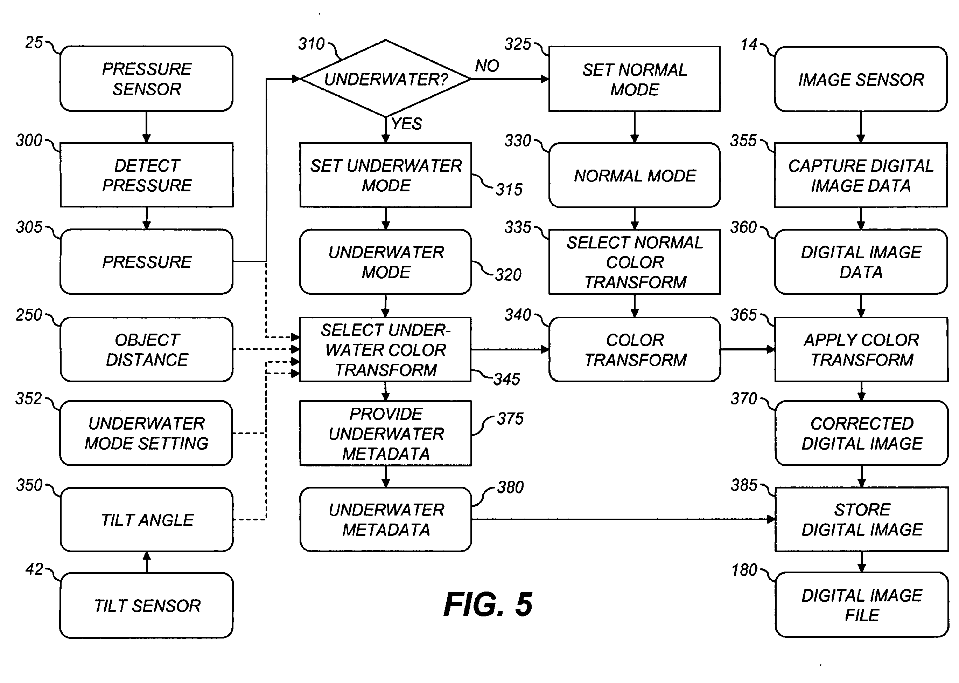

The camera modes that can be selected using the user controls 34 include an "underwater photography" mode, which will be described later with respect to FIG. 5, and a "timer" mode. When the "timer" mode is selected, a short delay (e.g., 10 seconds) occurs after the user fully presses the shutter button, before the processor 20 initiates the capture of a still image.

A pressure sensor 25 on the digital camera 10 can be used to provide depth information which is useful for implementing the present invention, as will be described later with respect to FIG. 5. In a preferred embodiment of the present invention, the pressure sensor 25 is a pressure sensor which senses the pressure on the exterior of the digital camera 10. In an alternative embodiment, a moisture sensor can be used in place of, or in addition to, the pressure sensor 25 in order to determine whether the digital camera 10 is being used underwater.

An audio codec 22 connected to the processor 20 receives an audio signal from a microphone 24 and provides an audio signal to a speaker 26. These components can be to record and playback an audio track, along with a video sequence or still image. If the digital camera 10 is a multi-function device such as a combination camera and mobile phone, the microphone 24 and the speaker 26 can be used for telephone conversation. In some examples not part of the invention, microphone 24 is capable of recording sounds in air and also in an underwater environment when the digital camera 10 is used to record underwater images according to the method of the present invention. In the embodiments according to the invention, the digital camera 10 includes both a conventional air microphone as well as an underwater microphone (hydrophone) capable of recording underwater sounds.

In some embodiments, the speaker 26 can be used as part of the user interface, for example to provide various audible signals which indicate that a user control has been depressed, or that a particular mode has been selected. In some embodiments, the microphone 24, the audio codec 22, and the processor 20 can be used to provide voice recognition, so that the user can provide a user input to the processor 20 by using voice commands, rather than user controls 34. The speaker 26 can also be used to inform the user of an incoming phone call. This can be done using a standard ring tone stored in firmware memory 28, or by using a custom ring-tone downloaded from a wireless network 58 and stored in the image memory 30. In addition, a vibration device (not shown) can be used to provide a silent (e.g., non audible) notification of an incoming phone call.

The processor 20 also provides additional processing of the image data from the image sensor 14, in order to produce rendered sRGB image data which is compressed and stored within a "finished" image file, such as a well-known Exif-JPEG image file, in the image memory 30.

The digital camera 10 can be connected via the wired interface 38 to an interface/recharger 48, which is connected to a computer 40, which can be a desktop computer or portable computer located in a home or office. The wired interface 38 can conform to, for example, the well-known USB 2.0 interface specification. The interface/recharger 48 can provide power via the wired interface 38 to a set of rechargeable batteries (not shown) in the digital camera 10.

The digital camera 10 can include a wireless modem 50, which interfaces over a radio frequency band 52 with the wireless network 58. The wireless modem 50 can use various wireless interface protocols, such as the well-known Bluetooth wireless interface or the well-known 802.11 wireless interface. The computer 40 can upload images via the Internet 70 to a photo service provider 72, such as the Kodak EasyShare Gallery. Other devices (not shown) can access the images stored by the photo service provider 72.

In alternative embodiments, the wireless modem 50 communicates over a radio frequency (e.g. wireless) link with a mobile phone network (not shown), such as a 3GSM network, which connects with the Internet 70 in order to upload digital image files from the digital camera 10. These digital image files can be provided to the computer 40 or the photo service provider 72.

According to the present invention, the digital camera 10 is an underwater digital camera capable of being used to capture underwater digital images. For example, the digital camera 10 can be used by scuba divers exploring a coral reef or by children playing in a swimming pool. To prevent damage to the various camera components, the digital camera 10 includes a watertight housing 280 (FIG. 4).

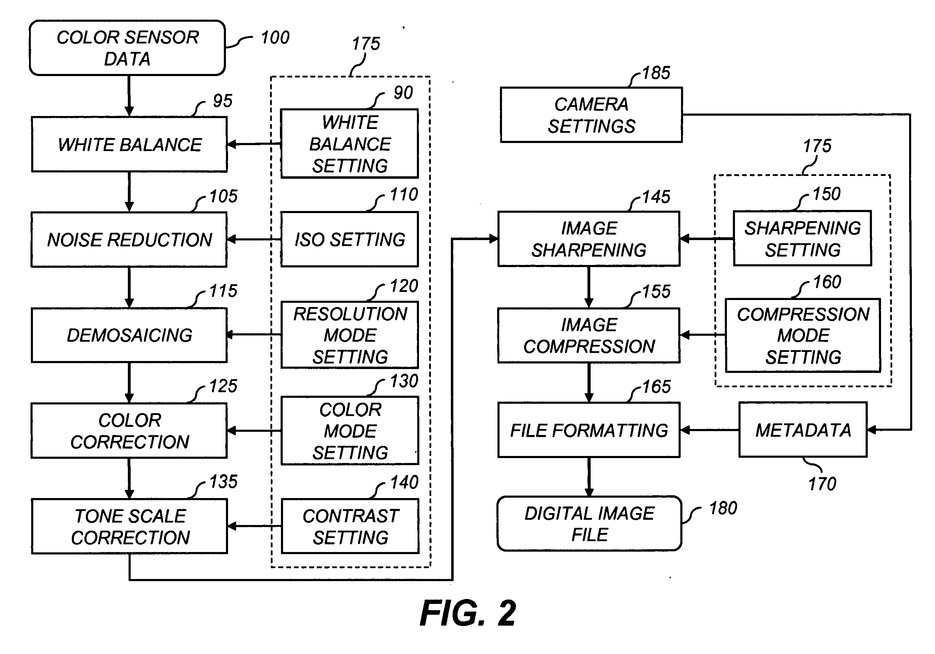

FIG. 2 is a flow diagram depicting image processing operations that can be performed by the processor 20 in the digital camera 10 (FIG. 1) in order to process color sensor data 100 from the image sensor 14 output by the ASP and A/D converter 16. In some embodiments, the processing parameters used by the processor 20 to manipulate the color sensor data 100 for a particular digital image are determined by various user settings 175, which can be selected via the user controls 34 in response to menus displayed on the image display 32.

The color sensor data 100 which has been digitally converted by the ASP and A/D converter 16 is manipulated by a white balance step 95. In some embodiments, this processing can be performed using the methods described in commonly-assigned U.S. patent 7,542,077 to Miki, entitled "White balance adjustment device and color identification device". The white balance can be adjusted in response to a white balance setting 90, which can be manually set by a user, or which can be automatically set when the camera is in the underwater mode, as will be described later in reference to FIG. 5.

The color image data is then manipulated by a noise reduction step 105 in order to reduce noise from the image sensor 14. In some embodiments, this processing can be performed using the methods described in commonly-assigned U.S. patent 6,934,056 to Gindele et al., entitled "Noise cleaning and interpolating sparsely populated color digital image using a variable noise cleaning kernel". The level of noise reduction can be adjusted in response to an ISO setting 110, so that more filtering is performed at higher ISO exposure index setting. The level of noise reduction can also be adjusted when the camera is in the underwater mode, as will be described later in reference to FIG. 5

The color image data is then manipulated by a demosaicing step 115, in order to provide red, green and blue (RGB) image data values at each pixel location. Algorithms for performing the demosaicing step 115 are commonly known as color filter array (CFA) interpolation algorithms or "deBayering" algorithms. In one embodiment of the present invention, the demosaicing step 115 can use the luminance CFA interpolation method described in commonly-assigned U.S. Patent 5,652,621, entitled "Adaptive color plane interpolation in single sensor color electronic camera," to Adams et al.. The demosaicing step 115 can also use the chrominance CFA interpolation method described in commonly-assigned U.S. Patent 4,642,678, entitled "Signal processing method and apparatus for producing interpolated chrominance values in a sampled color image signal", to Cok.

In some embodiments, the user can select between different pixel resolution modes, so that the digital camera can produce a smaller size image file. Multiple pixel resolutions can be provided as described in commonly-assigned U.S. Patent 5,493,335, entitled "Single sensor color camera with user selectable image record size," to Parulski et al.. In some embodiments, a resolution mode setting 120 can be selected by the user to be full size (e.g. 3,000×2,000 pixels), medium size (e.g. 1,500×1000 pixels) or small size (750x500 pixels).

The color image data is color corrected in color correction step 125. In some embodiments, the color correction is provided using a 3x3 linear space color correction matrix, as described in commonly-assigned U.S. Patent 5,189,511, entitled "Method and apparatus for improving the color rendition of hardcopy images from electronic cameras" to Parulski, et al.. In some embodiments, different user-selectable color modes can be provided by storing different color matrix coefficients in firmware memory 28 of the digital camera 10. For example, four different color modes can be provided, so that the color mode setting 130 is used to select one of the following color correction matrices:

Setting 1 (normal color reproduction)

$$\begin{bmatrix} R_{out} \\ G_{out} \\ B_{out} \end{bmatrix} = \begin{bmatrix} 1.50 & -0.30 & -0.20 \\ -0.40 & 1.80 & -0.40 \\ -0.20 & -0.20 & 1.40 \end{bmatrix} \begin{bmatrix} R_{in} \\ G_{in} \\ B_{in} \end{bmatrix} \qquad (1)$$

Setting 2 (saturated color reproduction)

$$\begin{bmatrix} R_{out} \\ G_{out} \\ B_{out} \end{bmatrix} = \begin{bmatrix} 2.00 & -0.60 & -0.40 \\ -0.80 & 2.60 & -0.80 \\ -0.40 & -0.40 & 1.80 \end{bmatrix} \begin{bmatrix} R_{in} \\ G_{in} \\ B_{in} \end{bmatrix} \qquad (2)$$

Setting 3 (de-saturated color reproduction)

$$\begin{bmatrix} R_{out} \\ G_{out} \\ B_{out} \end{bmatrix} = \begin{bmatrix} 1.25 & -0.15 & -0.10 \\ -0.20 & 1.40 & -0.20 \\ -0.10 & -0.10 & 1.20 \end{bmatrix} \begin{bmatrix} R_{in} \\ G_{in} \\ B_{in} \end{bmatrix} \qquad (3)$$

Setting 4 (monochrome)

$$\begin{bmatrix} R_{out} \\ G_{out} \\ B_{out} \end{bmatrix} = \begin{bmatrix} 0.30 & 0.60 & 0.10 \\ 0.30 & 0.60 & 0.10 \\ 0.30 & 0.60 & 0.10 \end{bmatrix} \begin{bmatrix} R_{in} \\ G_{in} \\ B_{in} \end{bmatrix} \qquad (4)$$

Setting 5 (nominal underwater color reproduction)

$$\begin{bmatrix} R_{out} \\ G_{out} \\ B_{out} \end{bmatrix} = \begin{bmatrix} 3.00 & -0.30 & -0.20 \\ -0.80 & 1.80 & -0.40 \\ -0.40 & -0.20 & 1.40 \end{bmatrix} \begin{bmatrix} R_{in} \\ G_{in} \\ B_{in} \end{bmatrix} \qquad (5)$$

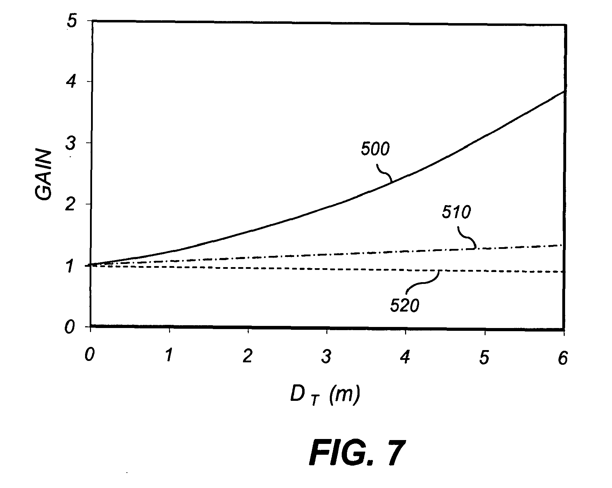

As will be discussed in more detail later with reference to FIG. 7, underwater images tend to have a reduced signal level in the red color channel. The color reproduction matrix in Eq. (5) represents a combination of the normal color reproduction matrix of Eq. (1), with a gain factor of 2x applied to the red input color signal $R_{in}$. This provides an improved color reproduction for a nominal underwater environment where the amount of red light in a captured image is reduced by a factor of 50%.

In other embodiments, a three-dimensional lookup table can be used to perform the color correction step 125. In some embodiments, different 3x3 matrix coefficients, or a different three-dimensional lookup table, are used to provide color correction when the camera is in the underwater mode, as will be described later in reference to FIG. 5.

The color image data is also manipulated by a tone scale correction step 135. In some embodiments, the tone scale correction step 135 can be performed using a one-dimensional look-up table as described in U.S. Patent No. 5,189,511, cited earlier. In some embodiments, a plurality of tone scale correction look-up tables is stored in the firmware memory 28 in the digital camera 10. These can include look-up tables which provide a "normal" tone scale correction curve, a "high contrast" tone scale correction curve, and a "low contrast" tone scale correction curve. A user selected contrast setting 140 is used by the processor 20 to determine which of the tone scale correction look-up tables to use when performing the tone scale correction step 135. In some embodiments, a high contrast tone scale correction curve is used when the camera is in the underwater mode, as will be described later.

The color image data is also manipulated by an image sharpening step 145. In some embodiments, this can be provided using the methods described in commonly-assigned U.S. Patent 6,192,162 entitled "Edge enhancing colored digital images" to Hamilton, et al.. In some embodiments, the user can select between various sharpening settings, including a "normal sharpness" setting, a "high sharpness" setting, and a "low sharpness" setting. In this example, the processor 20 uses one of three different edge boost multiplier values, for example 2.0 for "high sharpness", 1.0 for "normal sharpness", and 0.5 for "low sharpness" levels, responsive to a sharpening setting 150 selected by the user of the digital camera 10. In some embodiments, a special image sharpening algorithm is used when the camera is in the underwater mode, as will be described later.

The color image data is also manipulated by an image compression step 155. In some embodiments, the image compression step 155 can be provided using the methods described in commonly-assigned U.S. Patent 4,774,574, entitled "Adaptive block transform image coding method and apparatus" to Daly et al.. In some embodiments, the user can select between various compression settings. This can be implemented by storing a plurality of quantization tables, for example, three different tables, in the firmware memory 28 of the digital camera 10. These tables provide different quality levels and average file sizes for the compressed digital image file 180 to be stored in the image memory 30 of the digital camera 10. A user selected compression mode setting 160 is used by the processor 20 to select the particular quantization table to be used for the image compression step 155 for a particular image.

The compressed color image data is stored in a digital image file 180 using a file formatting step 165. The image file can include various metadata 170. Metadata 170 is any type of information that relates to the digital image, such as the model of the camera that captured the image, the size of the image, the date and time the image was captured, and various camera settings, such as the lens focal length, the exposure time and f-number of the lens, and whether or not the camera flash fired. In a preferred embodiment, all of this metadata 170 is stored using standardized tags within the well-known Exif-JPEG still image file format. In a preferred embodiment of the present invention, the metadata 170 includes information about camera settings 185, including information about whether the digital image was captured using an underwater photography mode.

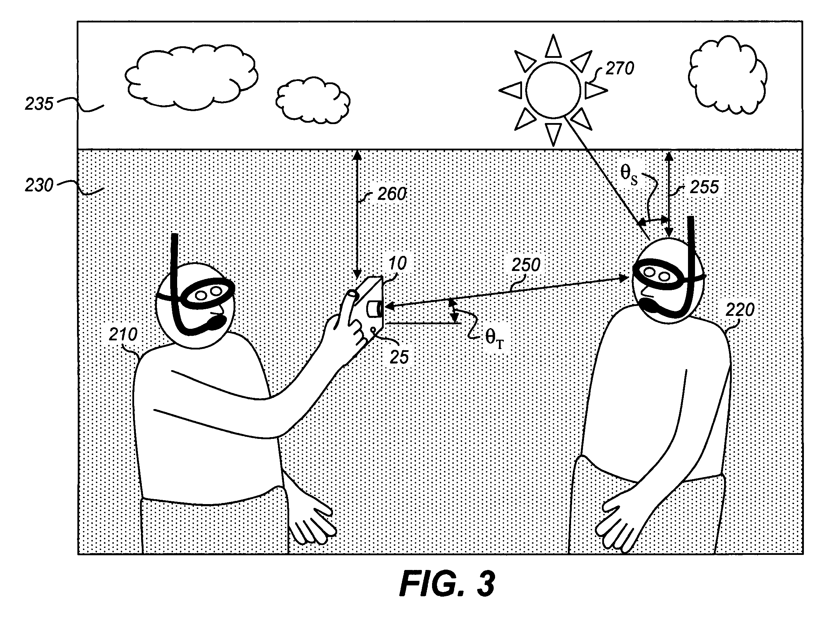

The present invention will now be described with reference to FIG. 3. A photographer 210 uses a digital camera 10 having a watertight housing 280 (FIG. 4) and a pressure sensor 25 to photograph an object in an underwater environment. For example, the photographer 210 can use the digital camera 10 at a camera depth 260 to capture a digital image of an additional person 220 at an object distance 250 and an object depth 255. Optionally, the photographer 210 can use the digital camera 10 to capture images of other objects such as fish and shipwrecks. The underwater environment can be any underwater location where a photographer 210 might want to capture photographs, such as a pool, a river, a lake or the ocean. For example, the photographer 210 could be a scuba diver photographing sea life at a coral reef, or the photographer 210 could be a child taking underwater photographs of his or her friends while playing in a backyard swimming pool.

The digital camera 10 includes a pressure sensor 25. The pressure sensor 25 returns a signal indicating the pressure outside the watertight housing 280. The pressure P as a function of depth in a fluid is given by:

$$P = P_0 + \rho \, g \, d_C \qquad (6)$$

where $P_0$ is the air pressure at the upper surface of the fluid, $\rho$ is the fluid density (~1000 kg/m$^3$), g is the acceleration due to gravity (~9.8 m/s$^2$) and $d_C$ is the camera depth 260.

Preferably, the pressure sensor 25 is calibrated to return the "gauge pressure" $P_G$, which is the pressure difference relative to the air pressure:

$$P_G = P - P_0 \qquad (7)$$

When the digital camera 10 is operated in air 235, the gauge pressure $P_G$ will be approximately equal to zero. When the digital camera 10 is operated in the water 230, the gauge pressure $P_G$ will be greater than zero. Therefore, the detected pressure provided by the pressure sensor 25 can be used to determine whether the digital camera 10 is being operated in the water 230 or the air 235 by performing the test:

$$\text{if } P_G < \epsilon \text{ then}$$
$$\text{Camera in Air}$$
$$\text{else} \qquad\qquad\qquad (8)$$
$$\text{Camera Underwater}$$

where $\epsilon$ is a small constant which is selected to account for the normal variations in atmospheric pressure.

The detected pressure can also be used to determine the camera depth 260 using the relationship:

$$d_C = P_G / \rho g \qquad\qquad (9)$$

which can be derived using Eqs. (6) and (7).

In some embodiments, the digital camera 10 includes a tilt sensor 42 (not shown in FIG. 3), which can detect a tilt angle $\theta_T$, which is the angle that the digital camera 10 is oriented relative to a horizontal direction. In many underwater photography environments, the primary illumination will be provided by the sun 270 which will illuminate the scene at a solar angle $\theta_s$. The solar angle $\theta_s$ will depend on the geographic location and the time of day. The path length that the light must travel through the water will be a function of both the tilt angle $\theta_T$ and solar angle $\theta_s$, and therefore the characteristics of the captured images will generally be a function of these parameters.

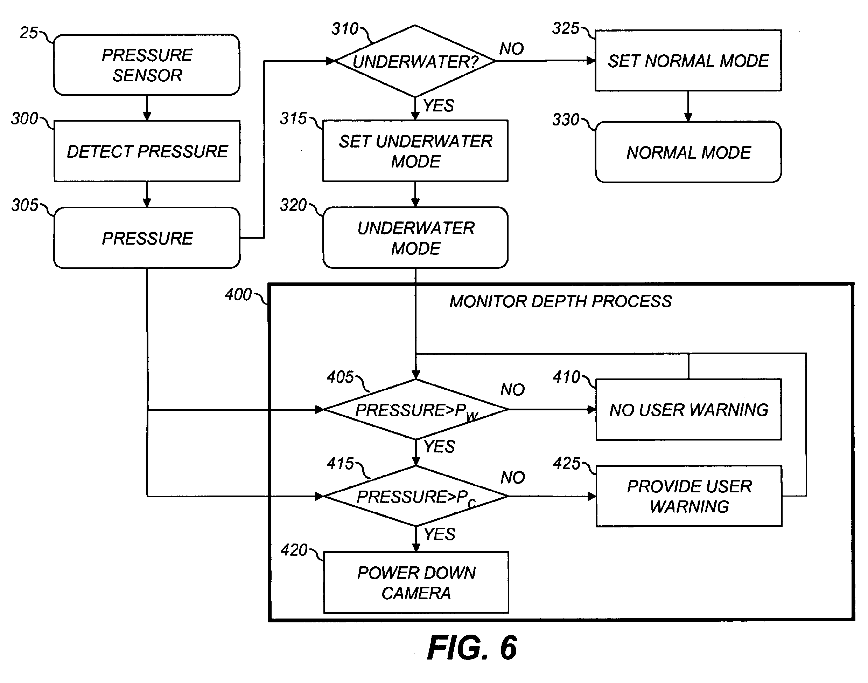

As will be described later with reference to FIGS. 5 and 6, the pressure detected by the pressure sensor 25 can be used to control the color correction applied to digital images captured by the digital camera 10, as well as to control other aspects of the operation of the digital camera 10. In some embodiments, the color correction can also be controlled responsive to the tilt angle $\theta_T$ and the object distance 250.

FIG. 4 is a diagram showing additional details of the digital camera 10. The digital camera 10 includes watertight housing 280 to enable operating the digital camera 10 in an underwater environment. Watertight housings 280 are generally rated to be watertight down to a certain maximum depth. Below this depth the water pressure may be so large that the watertight housing 280 will start to leak. The digital camera 10 also includes lens 4, pressure sensor 25 and image capture button 290, which is one of the user controls 34 in FIG. 1. Optionally, the digital camera 10 can include other elements such as flash 2, other user controls 34 (not shown in FIG. 4) and image display 32 (not shown in FIG. 4). In one embodiment of the present invention, the digital camera 10 is a digital still camera. In other embodiments, the digital camera 10 is a digital video camera, or is a digital still camera that also incorporates a video capture mode (i.e. "movie mode"), as described earlier in reference to FIG. 1.

A method for controlling the operation of a digital image capture device having an underwater image capture capability according to a preferred embodiment of the present invention will now be described with reference to FIG. 5. The digital camera 10 of FIG. 4 includes a pressure sensor 25 adapted to sense the pressure on the outside surface of the watertight housing 280. A detect pressure step 300 is used to detect a pressure 305. Preferably, the detected pressure 305 is a gauge pressure $P_G$ representing a difference between the pressure outside the watertight housing 280 and the air pressure $P_0$. An underwater test 310 determines whether the digital camera 10 is being operated underwater responsive to the pressure 305. In a preferred embodiment of the present invention, the underwater test 310 applies the test given in Eq. (8) to determine whether the digital camera 10 is being operated underwater.

If the underwater test 310 determines that the digital camera 10 is being operated underwater, a set underwater mode step 315 is used to set the digital camera 10 to operate in an underwater mode 320. When the digital camera 10 is operating in the underwater mode 320, the operation of various components of the digital camera 10 can be adjusted accordingly. For example, the behavior of various user controls 34 (e.g., buttons and menus) can be set to behave differently for the underwater mode 320. Additionally, when operating in the underwater mode 320, the digital camera 10 is configured to use an underwater microphone to record underwater sounds rather than a conventional microphone 24. In some embodiments, the frequency response of the audio codec 22 can also be adjusted according to whether the digital camera 10 is being operated in an underwater mode 320. Also, components, such as the wireless modem 50, which would not be useful when the digital camera 10 is operating underwater can be turned off to save power in the underwater mode 320.

When the digital camera 10 is operating in the underwater mode 320, a select underwater color transform step 345 is used to select a color transform 340. The color transform 340 selected when the digital camera 10 is being operated in the underwater mode 320 is used to adjust the color reproduction of captured digital images to account for the characteristics of the underwater photography environment. For example, digital images captured underwater tend to be reproduced with a cyan color cast if a normal color transform is applied. Underwater color transforms that are selected when the digital camera 10 is operating in the underwater mode 320 can be designed to remove the cyan color cast.

The selected color transform 340 can include the transforms used in both the color correction step 125 (FIG. 2) and the tone scale correction step 135 (FIG. 2). Alternately, it can include the transforms used in only one of these steps, or it can provide a composite color transform that embodies both the color correction and tone scale correction functions.

In one embodiment of the present invention the select underwater color transform step 345 selects an underwater color transform to use in place of a normal color transform. There are many different forms of color transforms 340 known in the art that can be used to adjust the color reproduction characteristics of a digital image. Typically, the selected color transform 340 is comprised of a sequence of one or more color transformation elements such as color correction matrices, one-dimensional look-up tables and three-dimensional look-up tables, as described earlier in reference to FIG. 2. In a preferred embodiment, the color transformation elements are adjusted to control the color balance and color reproduction of the captured image by adjusting the color transformation elements applied by the white balance step 95 (in FIG. 2) or the color correction step 125 (in FIG. 2), or both. The color transformation elements can also be adjusted to provide other color reproduction adjustments such as a flare correction, a contrast adjustment, a saturation adjustment or a tone scale adjustment. The degree of adjustment provided in the underwater mode can be determined empirically by capturing representative images and making manual adjustments to determine parameters for the color transformation elements that provide optimal color reproduction characteristics. Alternatively, test targets can be photographed in various underwater environments and the parameters for the color transformation elements can be automatically determined to compensate for the characteristics of the underwater environment.

In an alternate embodiment, rather than replacing the normal color transform, an additional color transformation element can be combined with the normal color transform, being applied either before or after the normal color transform. For example, a set of one-dimensional look-up tables can be used to adjust the color balance in order to remove the cyan cast associated with an underwater scene providing balanced digital image data. Then the normal color transform can be applied to process the balanced digital image data.

In another embodiment, the color reproduction is controlled by adjusting one or more color controls associated with the image sensor. For example, the integration times provided by timing generator 12 (see FIG. 1) can be adjusted for one or more color channels of the image sensor 14 in order to provide an adjusted color balance setting. Similarly, analog or digital amplification factors provided by ASP and A/D Converter 16 can be adjusted for one or more color channels of the image sensor 14.

In some embodiments, the underwater color transform selected for the underwater mode 320 may be designed to only partially correct for the red-light attenuation induced by the underwater conditions. This can impart a nominal, but aesthetically pleasing, cyan color cast to the recorded images that many photographers find preferable to evoke a visual impression of underwater conditions. This is analogous to the fact that many photographers prefer to retain a slight red-yellow color cast for images captured under tungsten illumination. In some embodiments, a user control 34 can be provided to allow the user to select between a full-correction underwater mode and a partial correction underwater mode according to personal preference.

As will be discussed later, in a preferred embodiment of the present invention, the select underwater color transform step 345 selects the color transform 340 responsive to the sensed pressure 305. Optionally, the select underwater color transform step 345 may also determine the color transform 340 responsive to an object distance 250 to an object being photographed and a tilt angle 350 determined using the tilt sensor 42. An underwater mode setting 352 can also be used to control the select underwater color transform step 345. For example, the digital camera 10 may be provided with user controls 34 (FIG. 1) that can enable the user to choose between different underwater modes corresponding to different water classifications (e.g., a fresh water mode, a salt water mode or a swimming pool mode).

In an alternate embodiment of the present invention, a single underwater color transform is provided for use with the underwater mode 320 independent of the pressure 305, object distance 250, tilt angle 350 and underwater mode setting 352. The single underwater color transform provided in this embodiment can be optimized to compensate for a typical depth (e.g., 1 meter) and a typical distance (e.g., 2 meters).

If the underwater test 310 determines that the digital camera 10 is not being operated underwater, a set normal mode step 325 is used to set the camera to operate in a normal mode 330. In this case, a select normal color transform step 335 is used to select the color transform 340. In some embodiments a single normal color transform is provided for use whenever the digital camera 10 is not being operated underwater. In alternate embodiments, a variety of color transforms can be provided that are automatically selected according to detected photography conditions or user controls 34. For example, different normal color transforms can be selected responsive to a detected illumination color temperature, or according to a selected photography mode (e.g., landscape mode, portrait mode or sunset mode).

The digital camera 10 has an image capture button 290 (FIG. 4) to allow the photographer 210 (FIG. 3) to initiate capturing a digital image. In some embodiments, alternate means for initiating image capture can be provided such as a time mechanism or a remote control. When the photographer 210 initiates image capture, a capture digital image data step 355 is used to capture digital image data 360 using the image sensor 14. An apply color transform step 365 is used to apply the color transform 340 to the digital image data 360, forming a corrected digital image 370. For cases when the digital image data 360 corresponds to a video sequence, the apply color transform step 365 applies the color transform 340 to each frame of the video sequence

A store digital image step 385 stores the corrected digital image 370 in a digital image file, producing a digital image file 180 described earlier in reference to FIG. 2. In one embodiment of the present invention, the digital camera 10 is a digital still camera, and the digital image file 180 is stored using a standard digital image file format such as the well-known EXIF file format. In embodiments where the digital camera 10 provides digital image data 360 for a video sequence, the digital image file 180 can be stored using a standard digital video file format such as the well-known H. 264 (MPEG-4) video file format.

Standard digital image filed formats and digital video file formats generally support storing various pieces of metadata 170 (FIG. 2) together with the digital image file. For example, metadata 170 can be stored indicating pieces of information such as image capture time, lens focal length, lens aperture setting, shutter speed and various user settings. In a preferred embodiment of the present invention, when the digital camera 10 is operating in the underwater mode 320, a provide underwater metadata step 375 is used to provide underwater metadata 380 to be associated with the stored digital image. Preferably, the underwater metadata 380 is stored as metadata tags in the digital image file 180. Alternately, the underwater metadata 380 can be stored in a separate file associated with the digital image file 180.

In one embodiment, the underwater metadata 380 is a simple Boolean value indicating whether the digital image was captured using in an underwater mode 320 or a normal mode 330. In other embodiments, the underwater metadata 380 can include additional information such as the pressure 305, or the camera depth 260 (FIG. 3) determined from the pressure 305. Other relevant pieces of metadata could include the object distance 250, the tilt angle 350, the underwater mode setting 352 and the selected color transform 340.

The underwater metadata 380 can be used for a variety of purposes. For example, a collection of digital image files 180 can contain some digital images captured underwater, and others captured in air. A user may desire to search the collection of digital image files 180 to quickly find the digital images captured underwater. The underwater metadata 380 provides a convenient means for identifying the digital images captured underwater. Another example of how the underwater metadata 380 can be used would be to control the behavior of image processing algorithms applied at a later time on a host computer system. Those skilled in the art will recognize that the underwater metadata 380 can be used for a variety of other purposes.

In a preferred embodiment of the present invention the apply color transform step 365 is applied using the processor 20 (FIG. 1) in the digital camera 10. In other embodiments, the apply color transform step 365 can be applied using a processor in an external computing device, such as a personal computer. For example, the digital camera 10 can provide the photographer 210 (FIG. 3) with an option to store the digital image data 360 in a raw format for processing at a later time. In this case, only a subset of the image processing operations described with respect to FIG. 2 are applied using the processor 20 in the digital camera 10, and the rest are applied using software provided on the external computing device. In one embodiment, the software on the external computing device can select an appropriate color transform 340 responsive to the underwater metadata 380 associated with the stored digital image 180.

The watertight housing 280 (FIG. 5) for the digital camera 10 is typically only watertight up to a certain water pressure. As the digital camera 10 is operated at large depths, water may start to leak into the watertight housing, creating a danger that the internal components of the digital camera 10 can be damaged by the water. Electronic components are particularly susceptible to water damage. FIG. 6 illustrates a flowchart according to an embodiment of the present invention where the sensed pressure 305 is used to warn the photographer 210 (FIG. 3) when the digital camera 10 is being operated at a dangerous depth.

The underwater test 310 determines whether the digital camera 10 is being operated underwater responsive to the pressure 305 as has been discussed above with respect to FIG. 5. When the underwater test 310 determines that the digital camera 10 is being operated underwater, the digital camera 10 is set to operate in the underwater mode 320 using the set underwater mode step 315. While the digital camera 10 is operating in the underwater mode 320, a monitor depth process 400 is used to monitor the depth and control the behavior of the digital camera 10 accordingly. A warning pressure test 405 is used to compare the determined pressure 305 to a predetermined warning pressure $P_W$. If the pressure 305 is less than warning pressure $P_W$, then a no user warning step 410 is called and the monitor depth process 400 continues to monitor the pressure 305. In a preferred embodiment of the present invention, the no user warning step 410 is a null operation that performs no actions. In an alternate embodiment, an indication can be provided to the photographer 210 that the digital camera 10 is operating at a safe depth. For example, a message or icon can be displayed on the image display 32 (FIG. 1), or a green signal light can be activated.

If the warning pressure test 405 determines that the pressure 305 is greater than or equal to the warning pressure $P_W$, then a critical pressure test 415 is used to compare the determined pressure 305 to a predetermined critical pressure $P_C$. If the pressure 305 is less than the critical pressure $P_C$, a provide user warning step 425 is used to provide a warning to the photographer 210 that he is approaching a dangerous depth. The warning can be provided using any means known in the art. In one embodiment, the warning is provided to the photographer 210 by displaying a message or icon on a display screen such as the image display 32 (FIG. 1). For example an alphanumeric message can be displayed telling the photographer to move to a shallower depth. Alternately, a red signal light can be activated, the flash 2 (FIG. 1) can be repeatedly flashed, or some other warning signal can be provided.

If the critical pressure test 415 determines that the pressure 305 is greater than or equal to the critical pressure $P_C$, then a power down camera step 420 is used to power down the camera to reduce the chances that the electronic camera components are damaged if water leaks into the watertight housing 280 (FIG. 4).

In an alternate embodiment, the warning pressure test 405 and the critical pressure test 415 can be used to evaluate the camera depth 260 (FIG. 3) rather than the pressure 305. In this case, the camera depth 260 can be computed from the sensed pressure 305 using Eq. (9) and the warning pressure test 405 and the critical pressure test 415 can be used to compare the camera depth 260 to a warning depth $D_W$ (corresponding to the warning pressure $P_W$) and a critical depth $D_C$ (corresponding to the critical pressure $P_C$), respectively.

The amount of underwater color correction appropriate to produce a pleasing image will generally be a function of the total path length that the light must travel through the water before reaching the digital camera 10. For an overhead light source, the total water path length is given by:

$$D_T = D_O + d_O \qquad (9A)$$

where $D_T$ is the total water path length, Do is the object distance 250 and do is the object depth 255.

In a preferred embodiment of the present invention, the digital camera 10 includes an autofocus system which automatically estimates the object distance 250 and sets the focus of the lens 4 accordingly, as described earlier in reference to FIG. 1. The object distance 250 determined using the autofocus system can then be used to determine the total water path length $D_T$. It should be noted that the object distance determined by the autofocus system will generally assume that the digital camera 10 is being operated in air. Since objects in water appear to be closer than they really are, the autofocus system will determine an object distance corresponding to the apparent object distance rather than the actual object distance. To determine the actual object distance when the digital camera 10 is being operated underwater, it is necessary to account for the index of refraction of the water:

$$D_O = D_A \cdot n_w \qquad (10)$$

where $D_A$ is the apparent object distance determined assuming an air environment and $n_w$ is the index of refraction of the water (typically $n_w \approx 1.33$).

In an alternate embodiment, a means for manually determining the object distance 250 can be provided. For example, a manual focus system can be provided to enable the photographer 210 to select a focus position. The object distance 250 can then be determined from the selected focus position. In another embodiment, a rough estimate of the object distance 250 can be determined by whether or not the photographer has selected a macro photography mode. In yet another embodiment, the user can be provided with a user interface that allows the user to preview the color reproduction characteristics that would result from using different object distances and to select the object distance 250 that produces the most pleasing color reproduction characteristics.

Generally, the object depth 255 will not be directly known. However, a reasonable approximation in many cases is to assume that the object depth 255 is equivalent to the camera depth 260, which can be determined using the pressure sensor 25. This assumption is valid when the digital camera 10 is oriented horizontally. In this case, the total water path length $D_T$ can be approximated as:

$$D_T \approx D_O + d_C \qquad (11)$$

where $d_C$ is the camera depth 260. An even better estimate of the total water path length $D_T$ can be determined if the digital camera 10 includes a tilt sensor 42 (FIG. 1) which determines a tilt angle $\theta_T$ (FIG. 3). In this case, the total water path length $D_T$ can be approximated as:

$$D_T = D_O(1 - \sin\theta_T) + d_C \qquad (12)$$

The above calculations for the total water path length $D_T$ make the assumption that the light source is directly overhead so that the distance that the light travels through the water before it strikes the object is given by the object depth 255. For cases where the illumination is provided by direct sunlight, a more accurate estimate can be obtained by accounting for the solar angle $\theta_s$ (FIG. 3). In an alternate embodiment of the present invention, the solar angle $\theta_s$ can be determined from a knowledge of the image capture time and the geographic location of the digital camera 10. The capture time can be determined using the internal clock provided in most digital cameras 10. The geographic location can be determined using a global positioning system (GPS) sensor, or using other means such as automatically sensing signals from nearby cell phone towers. The digital camera 10 can also include user controls 34 that enable the photographer 210 to manually specify the geographic location. For cases when the solar angle can be determined, total water path length $D_T$ can be approximated as:

$$D_T = D_O(1 - \sin\theta_T / \cos\theta_S) + d_C / \cos\theta_S \qquad (13)$$

Note that for cases where the sky is covered with clouds, the illumination will be diffuse and will not be incident on the subject at a particular solar angle $\theta_s$. For this reason, it may not always be desirable to include the solar angle factor even if the means is available to determine its value. In some embodiments, a user control 34 can be provided to indicate whether the illumination is direct sunlight or diffuse illumination.

In some embodiments, the digital camera 10 includes a flash 2 that can be used to illuminate the scene during image capture. In cases where the flash 2 is used to illuminate an underwater scene, and where the flash 2 is the dominant light source, the total water path length $D_T$ can be determined by doubling the object distance 250 since the light will travel from the digital camera 10 to the object and back again:

$$D_T = 2\,D_O \qquad (14)$$

In some embodiment of the present invention, the underwater color transform selected when the digital camera 10 is operating in the underwater mode 320 is a function of the total water path length $D_T$. The principal effect that the water has on the captured digital image is to attenuate light at longer visible wavelengths (e.g., red light) more strongly than light at shorter visible wavelengths (e.g., green and blue light). One way to compensate for the effect of this attenuation is to apply different gain factors to the each of the color channels of the digital image data 360.

There are several different places in the imaging chain of the digital camera 10 where an underwater color transform incorporating such gain factors can be applied to provide the desired underwater color reproduction. For example, color controls associated with the image sensor 14, such as integration times associated with each color channel of the image sensor 14 can be controlled to apply the appropriate gain factors. Alternatively, analog or digital gain factors, can be applied directly to linear signals obtained from the image sensor 14. In other embodiments, the gain factors can be incorporated into the white balance step 95 or the color correction step 125 in the image processing path of FIG. 2. For example, white balance look-up tables applied in the white balance step 95 can be adjusted to incorporate the gain factors, or the matrix coefficients for a color correction matrix applied in the color correction step 125 can be scaled using the gain factors to combine the underwater correction with the nominal color correction provided by a default color correction matrix. An example of a color correction matrix incorporating a red channel gain factor of 2x was shown in Eq. (5).

FIG. 7 shows a graph illustrating how the gain factors for the different color channels can be adjusted as a function of the total water path length $D_T$ according to one embodiment of the present invention. In this example, the gain factor for the red color channel doubles for every 3 meters of total water path length. The gain factor for the green color channel increases by only 20% for every 3 meters, and the gain factor for the blue color channel remains constant, reflecting the fact that the water attenuates the shorter wavelength light to a lesser degree. The gain factor functions can be represented in equation form as follows:

$$G_R = G_{R3}^{(D_T/3.0)} = 2.0^{(D_T/3.0)} \tag{15}$$

$$G_G = G_{G3}^{(D_T/3.0)} = 1.2^{(D_T/3.0)} \tag{16}$$

$$G_B = G_{B3}^{(D_T/3.0)} = 1.0^{(D_T/3.0)} \tag{17}$$

where $D_T$ is the total water path length in meters, $G_R$, $G_G$ and $G_B$ are the gain factors for the red, green and blue color channels, respectively, and $G_{R3}$ = 2.0, $G_{G3}$ = 1.2 and $G_{B3}$ = 1.0 are the gain factors for the red, green and blue color channels appropriate a total water path length of 3 meters, respectively.

The gain factor curves shown in FIG. 7 are representative of those that would be appropriate for a typical image sensor 14 and typical water/lighting conditions. The exact form for the gain factor curves will generally be a function of the spectral sensitivity of the image sensor 14, together with the spectral transmissivity of the water and the spectral power distribution of the illumination. In many cases, gain factor functions appropriate for different image sensors and water/lighting conditions can be formed by determining new values for $G_{R3}$, $G_{G3}$ and $G_{B3}$. These values can be determined experimentally for different configurations. In other cases, it may be appropriate to use different functional forms for the gain factor functions. An appropriate form for the gain factor functions can be determined by photographing a grayscale test target at various  distances corresponding to different total water path lengths to determine gain values, and then determining a functional form using standard curve fitting methods well-known to those of ordinary skill in the art.

In some embodiments, user controls 34 can be used to select between different underwater modes corresponding to different water types (e.g., fresh water mode, salt water mode or swimming pool mode). In this case, different gain factor curves could be associated with each of the different underwater modes. Alternatively, a single underwater mode can be provided which uses gain factor curves associated with nominal underwater photography conditions. In this case, the differences in the water characteristics would show up as differences in the resulting color reproduction.

For the case where the digital camera 10 includes a geographic location sensing means such as a GPS sensor, a sensed geographic location can be determined when the camera is being operated in the underwater mode and the sensed geographic location can be compared to a geographic database to determine a body of water where the digital camera 10 is being operated. A particular underwater mode can then be selected accordingly. For example, if the sensed geographic location corresponds to a location in the Atlantic Ocean off the coast of Florida, the salt water mode can be selected, or if the sensed geographic location corresponds to a location in Lake Ontario then a fresh water mode can be selected. If the sensed geographic location does not correspond to a known body of water in the geographic database, it can be generally be assumed that the camera is being used in a swimming pool and the swimming pool mode can be selected.

In other embodiments, more complex color transform modifications can be associated with the underwater mode 320. For example, custom color correction matrices can be determined for different water conditions to optimize the color reproduction accordingly. The custom color correction matrices can be determined by photographing test targets having a series of different color patches and using a mathematical regression method to determine the matrix coefficients for the custom color correction matrix that will provide color reproduction matching a specified aim. In other embodiments, the  underwater color transforms can be implemented using three-dimensional look-up tables which provide additional degrees of freedom for customizing the color reproduction. Methods for forming color transforms using three-dimensional look-up tables are well-known to those of ordinary skill in the art.

In some embodiments, the tone scale correction step 135 can also be adjusted for images capture in the underwater mode 320. Underwater photographs tend to suffer from higher flare levels associated with scattering of light by the water, or by particulate matter suspended in the water. This can result in visibly lightened shadow areas in underwater images. To compensate for this, a flare correction can be built into the tone scale function applied in the tone scale correction step 135. In some embodiments, the flare correction can be implemented by subtracting a constant flare value representative of the flare level from linear signal values for each of the color channels. In general, it will be appropriate to use different flare values for each of the color channels due to the fact that the scattering characteristics of the water may vary as a function of wavelength. Other types of tone scale adjustments can also be provided for use with the underwater mode 320. For example, a higher contrast tone scale correction curve can be used to provide images with higher visual impact.

In some embodiments other aspects of the color reproduction can be adjusted for images captured in the underwater mode 320. For example, a saturation adjustment can also be provided in the underwater mode. One way to implement such a saturation adjustment is to modify the coefficients of the color correction matrix as was shown in Eq. (2). Using a color correction matrix that incorporates a saturation boost may be desirable to enhance the colorfulness of objects such as tropical fish typically encountered in underwater images.

In some embodiments, the digital camera 10 has a flash 2 having an adjustable correlated color temperature as mentioned earlier with respect to FIG. 1. In this case, the color reproduction can be controlled by adjusting the correlated color temperature of the flash illumination when the digital camera 10 is operating in underwater mode 320. For example, a lower correlated color temperature having a higher proportion of red light can be used when the camera is operating in underwater mode 320. This can, at least partially, compensate for the fact that the water absorbs a higher proportion of the red light. In some embodiments, the correlated color temperature of the flash 2 can be continuously adjusted responsive to the object distance 250 or camera depth 260, using increasingly lower correlated color temperatures as the object distance 250 or camera depth 260 increases to provide increasingly higher proportions of red light. It can also be useful to adjust the overall illumination level of the flash 2 responsive to whether the digital camera 10 is operating in an underwater mode 320 to account for the absorption of the water. The illumination level of the flash 2 can also be adjusted responsive to the object distance 250 to account for the fact that more light will be absorbed for longer object distances 250.

In addition to adjusting the color reproduction characteristics of the digital image data 360 (FIG. 5) according to whether the digital camera 10 is being operated in an underwater mode 320, it can also be beneficial to adjust aspects of other image processing operations that are applied to the digital image data 360. (In some embodiments, the other image processing operations can be adjusted without adjusting the color reproduction characteristics.)

For example, underwater photographs tend to be a little less sharp than photographs captured in air due to the light scattering properties of the water. Therefore, it can be advantageous to adjust a degree of sharpening applied during the image sharpening step 145 (FIG. 2) in response to whether the digital camera is being operated in an underwater mode 320 (FIG. 5) or a normal mode 330 (FIG. 5). This can be accomplished by having different sharpening settings 150 (FIG. 2) that are selected responsive to the determined photography mode. The degree of blur in an underwater photograph will typically be a function of the object distance 250 (FIG. 3). In one embodiment, the degree of sharpening applied when the camera is in an underwater mode is adjusted responsive to the object distance, such that an increased degree of sharpening is applied for larger object distances object distance to account for the larger degree of blur. It may also be useful to adjust the degree of sharpening responsive to other factors such as the underwater mode setting 352. For example, the blur characteristics of images captured in a swimming pool are typically different than those captured in a salt water environment.

Typically, adjusting the underwater color transforms selected for the underwater mode 320 will involve amplifying a red color channel of the captured digital image to account for the fact that the water tends to filter out the red light as has been discussed with reference to FIG. 7. As a result, the underwater color transforms will tend to amplify the image noise in the red color channel. Sharpening the noisy red color channel can result in a further amplification of the image noise. In some embodiments of the present invention, the degree of sharpening applied to the red color channel of the captured digital image is reduced when the digital camera 10 is operating in an underwater mode 320. In the limiting case, no sharpening is applied to the red color channel.

The amount of spatial noise in an underwater photograph is often larger than for a photograph captured in a normal mode due to the presence of particles in the water, as well as the increased amplification of the red color channel. It can therefore be beneficial to adjust a degree of noise reduction applied in the noise reduction step 105 responsive to whether the digital camera is being operated in an underwater mode 320 (FIG. 5) or a normal mode 330 (FIG. 5). This can be accomplished by modifying one or more parameters of the noise reduction algorithm applied in the noise reduction step 105 to account for the difference in the noise characteristics of the image. For example, the parameters can be adjusted to provide more aggressive noise reduction when the digital camera 10 is in the underwater mode 320. In some embodiments, it can be desirable to only apply the more aggressive noise reduction to the red color channel of the captured digital image since that is where the largest noise levels are typically observed. Alternately, different noise reduction algorithms can be applied when the digital camera 10 is in the underwater mode 320 than when it is in the normal mode 330. As with the sharpening correction, it can be beneficial to adjust the degree of noise reduction responsive to the object distance 250, the underwater mode setting 352 or other factors.

In an alternate example not part of the present invention, the digital camera 10 does not include a pressure sensor 25 (FIG. 1). Therefore, it is not possible to select the underwater mode 320 (FIG. 5) responsive to the sensed pressure 305. In this case, the underwater mode 320 or normal mode 330 can be selected using user controls 34 (FIG. 1) provided as part of the user interface for the digital camera. For example, the underwater mode 320 can be selected from options presented in a settings menu displayed on the image display 32 (FIG. 1). Alternately, a button or switch can be provided on the digital camera 10 to allow the photographer to manually select the underwater mode 320.

In some embodiments, the photographer 210 uses the digital camera 10 of the present invention to capture digital still images. In other embodiments, the digital camera 10 of the present invention is a digital video camera, or is a digital still camera that also incorporates a video capture mode (i.e. "movie mode"). When the present invention is used in the process of capturing digital video images, it may be desirable to modify the photography mode during the capture of a video clip. For example, the photographer may start filming while he is above water, but may continue filming while he dives into the water. In this case, the digital camera 10 can automatically change to an underwater photography mode when it senses that it is underwater. Similarly, if the photographer pans the camera to capture images of objects at different object distances, or moves to a different depth, the underwater color transform can be adjusted accordingly as was described above with reference to FIG. 5.

**PARTS LIST**

| | |
|---|---|
| 2 | flash |
| 4 | lens |
| 6 | adjustable aperture and adjustable shutter |
| 8 | zoom and focus motor drives |
| 10 | digital camera |
| 12 | timing generator |
| 14 | image sensor |
| 16 | ASP and A/D Converter |
| 18 | buffer memory |
| 20 | processor |
| 22 | audio codec |
| 24 | microphone |
| 25 | pressure sensor |
| 26 | speaker |
| 28 | firmware memory |
| 30 | image memory |
| 32 | image display |
| 34 | user controls |
| 36 | display memory |
| 38 | wired interface |
| 40 | computer |
| 42 | tilt sensor |
| 44 | video interface |
| 46 | video display |
| 48 | interface/recharger |
| 50 | wireless modem |
| 52 | radio frequency band |
| 58 | wireless network |
| 70 | Internet |
| 72 | photo service provider |
| 90 | white balance setting |
| 95 | white balance step |
| 100 | color sensor data |
| 105 | noise reduction step |
| 110 | ISO setting |
| 115 | demosaicing step |
| 120 | resolution mode setting |
| 125 | color correction step |
| 130 | color mode setting |
| 135 | tone scale correction step |
| 140 | contrast setting |
| 145 | image sharpening step |
| 150 | sharpening setting |
| 155 | image compression step |
| 160 | compression mode setting |
| 165 | file formatting step |
| 170 | metadata |

175    user settings
180    digital image file
185    camera settings
210    photographer
220    additional person
230    water
235    air
250    object distance
255    object depth
260    camera depth
270    sun
280    watertight housing
290    image capture button
300    detect pressure step
305    pressure
310    underwater test
315    set underwater mode step
320    underwater mode
325    set normal mode step
330    normal mode
335    select normal color transform step
340    color transform
345    select underwater color transform step
350    tilt angle
352    underwater mode setting
355    capture digital image data
360    digital image data
365    apply color transform step
370    corrected digital image
375    provide underwater metadata step
380    underwater metadata
385    store digital image step
400    monitor depth process
405    warning pressure test
410    no user warning step
415    critical pressure test
420    power down camera step
425    provide user warning step
500    red gain function
510    green gain function
520    blue gain function

**Claims**

1.    A digital image capture device for use in capturing underwater digital images, comprising:

    a watertight housing (280);
    an image sensor (14) for capturing a digital image;
    an optical system (4) for imaging a scene onto the image sensor;
    a means (25) for sensing a pressure outside the watertight housing;
    an underwater microphone (24) for recording sounds when the digital image capture device is being operated underwater;
    an air microphone (24) for recording sounds when the digital image capture device is not being operated underwater; and
    a processor (20) arranged to for perform the steps of:

        determining a sensed pressure;

capturing (355) a digital image of a scene using the image sensor;

using (310) the sensed pressure to determine an indication of whether the digital image capture device is being operated underwater and selecting an underwater photography mode (320) or a normal photography mode (330) accordingly;

processing the captured digital image according to the selected photography mode;

automatically selecting either the underwater microphone or the air microphone according to whether the digital image capture device is operated in the underwater photography mode or the normal photography mode; and

storing (385) the processed digital image (180) in a processor accessible memory (30).

2. The digital image capture device of claim 1 wherein the processor is further arranged to perform the step of associating metadata pertaining to the selected photography mode with the stored digital image.

3. The digital image capture device of claim 1 wherein the processor is further arranged to perform the step of associating metadata pertaining to the sensed pressure with the stored digital image.

4. The digital image capture device of claim 1 wherein the processing of the captured digital image is adjusted by adjusting a color reproduction of the captured digital image according to the selected photography mode.

5. The digital image capture device of claim 4 wherein the processor is further arranged to perform the step of associating metadata providing an the indication of the selected photography mode with the stored digital image, thereby enabling a processor in an external computing device to be used to adjust the color reproduction of the stored digital image responsive to the associated metadata.

6. The digital image capture device of claim 4 wherein the color reproduction of the captured digital image is adjusted by applying an underwater color transformation when the digital image capture device is operated in the underwater photography mode.

7. The digital image capture device of claim 6 wherein color reproduction characteristics associated with the underwater color transformation are adjusted responsive to the sensed pressure.

8. The digital image capture device of claim 6 further including a means for determining an object distance between the digital image capture device and a main subject in the scene, and wherein color reproduction characteristics associated with the underwater color transformation are adjusted responsive to the determined object distance when the digital image capture device is operated in the underwater photography mode.

9. The digital image capture device of claim 1 wherein the step of processing the captured digital image according to the selected photography mode includes adjusting a degree of sharpening applied to the captured digital image by a digital image sharpening algorithm responsive to the selected photography mode.

10. The digital image capture device of claim 1 wherein the step of processing the captured digital image according to the selected photography mode includes adjusting a degree of noise reduction applied to the captured digital image by a noise reduction algorithm responsive to the selected photography mode.

11. The digital image capture device of claim 1 is arranged to provide a warning signal is when the sensed pressure exceeds a predetermined threshold.

12. The digital image capture device of claim 1 wherein the processor is further arranged to perform the step of using the sensed pressure to determine a depth between the digital image capture device and the surface of the water when the digital image capture device is operated in the underwater photography mode, and wherein a warning signal is provided to the user when the determined depth exceeds a predetermined threshold.

13. The digital image capture device of claim 1 wherein the digital image capture device is powered down when the sensed pressure exceeds a predetermined threshold.

14. The digital image capture device of claim 1 further including an electronic flash illumination source, and wherein flash illumination produced by the electronic flash illumination source is adjusted responsive to whether the digital image capture device is operated in the underwater photography mode.

**15.** The digital image capture device of claim 14 wherein the flash illumination is adjusted by adjusting a correlated color temperature or an illumination level of the flash illumination.

**Patentansprüche**

**1.** Digitale Bildaufnahmevorrichtung zum Gebrauch beim Aufnehmen von digitalen Unterwasserbildern, die Folgendes umfasst:

ein wasserdichtes Gehäuse (280);
einen Bildsensor (14) zum Aufnehmen eines digitalen Bildes;
ein optisches System (4) zum Abbilden eines Motivs auf den Bildsensor;
Mittel (25) zum Abfühlen eines Drucks außerhalb des wasserdichten Gehäuses;
ein Unterwassermikrophon (24) zum Aufzeichnen von Tönen, wenn die digitale Bildaufnahmevorrichtung unter Wasser betrieben wird;
ein Luftmikrophon (24) zum Aufzeichnen von Tönen, wenn die digitale Bildaufnahmevorrichtung nicht unter Wasser betrieben wird; und
einen Prozessor (20), der ausgelegt ist, die folgenden Schritte auszuführen:

Bestimmen eines abgefühlten Drucks;
Aufnehmen (355) eines digitalen Bildes eines Motivs unter Verwendung des Bildsensors;
Verwenden (310) des abgefühlten Drucks, um eine Angabe darüber, ob die digitale Bildaufnahmevorrichtung unter Wasser betrieben wird, zu bestimmen und dementsprechend Auswählen einer Unterwasserphotographiebetriebsart (320) oder einer Normalphotographiebetriebsart (330);
Verarbeiten des aufgenommenen digitalen Bildes gemäß der ausgewählten Photographiebetriebsart;
automatisches Auswählen entweder des Unterwassermikrophons oder des Luftmikrophons dementsprechend, ob die digitale Bildaufnahmevorrichtung in der Unterwasserphotographiebetriebsart oder der Normalphotographiebetriebsart betrieben wird; und
Speichern (385) des verarbeiteten digitalen Bildes (180) in einem für den Prozessor zugreifbaren Speicher (30).

**2.** Digitale Bildaufnahmevorrichtung nach Anspruch 1, wobei der Prozessor ferner ausgelegt ist, den Schritt des Zuordnens von Metadaten, die zu der ausgewählten Photographiebetriebsart gehören, zu dem gespeicherten digitalen Bild auszuführen.

**3.** Digitale Bildaufnahmevorrichtung nach Anspruch 1, wobei der Prozessor ferner ausgelegt ist, den Schritt des Zuordnens von Metadaten, die zu dem abgefühlten Druck gehören, zu dem gespeicherten digitalen Bild auszuführen.

**4.** Digitale Bildaufnahmevorrichtung nach Anspruch 1, wobei das Verarbeiten des aufgenommenen digitalen Bildes durch Einstellen einer Farbwiedergabe des aufgenommenen digitalen Bildes gemäß der ausgewählten Photographiebetriebsart eingestellt wird.

**5.** Digitale Bildaufnahmevorrichtung nach Anspruch 4, wobei der Prozessor ferner ausgelegt ist, den Schritt des Zuordnens von Metadaten, die eine Angabe der ausgewählten Photographiebetriebsart zur Verfügung stellen, zu dem gespeicherten digitalen Bild auszuführen und dadurch zu ermöglichen, dass ein Prozessor in einer externen Berechnungseinrichtung verwendet werden kann, um die Farbwiedergabe des gespeicherten digitalen Bildes in Reaktion auf die zugeordneten Metadaten einzustellen.

**6.** Digitale Bildaufnahmevorrichtung nach Anspruch 4, wobei die Farbwiedergabe des aufgenommenen digitalen Bildes durch Anwenden einer Unterwasserfarbtransformation eingestellt wird, wenn die digitale Bildaufnahmevorrichtung in der Unterwasserphotographiebetriebsart betrieben wird.

**7.** Digitale Bildaufnahmevorrichtung nach Anspruch 6, wobei Farbwiedergabeeigenschaften, die der Unterwasserfarbtransformation zugeordnet sind, in Reaktion auf den abgefühlten Druck eingestellt werden.

**8.** Digitale Bildaufnahmevorrichtung nach Anspruch 6, die ferner Mittel zum Bestimmen eines Objektabstands zwischen der digitalen Bildaufnahmevorrichtung und einem Hauptmotiv des Motivs enthält und wobei Farbwiedergabeeigenschaften, die der Unterwasserfarbtransformation zugeordnet sind, in Reaktion auf den bestimmten Objektabstand eingestellt werden, wenn die digitale Bildaufnahmevorrichtung in der Unterwasserphotographiebetriebsart betrieben wird.

9. Digitale Bildaufnahmevorrichtung nach Anspruch 1, wobei der Schritt des Verarbeitens des aufgenommenen digitalen Bildes gemäß der ausgewählten Photographiebetriebsart das Einstellen eines Schärfungsgrads, der durch einen digitalen Bildschärfungsalgorithmus auf das aufgenommene digitale Bild angewendet wird, in Reaktion auf die ausgewählte Photographiebetriebsart enthält.

10. Digitale Bildaufnahmevorrichtung nach Anspruch 1, wobei der Schritt des Verarbeitens des aufgenommenen digitalen Bildes gemäß der ausgewählten Photographiebetriebsart das Einstellen einer Rauschunterdrückung, die durch einen digitalen Rauschunterdrückungsalgorithmus auf das aufgenommene digitale Bild angewendet wird, in Reaktion auf die ausgewählten Photographiebetriebsart enthält.

11. Digitale Bildaufnahmevorrichtung nach Anspruch 1, die ausgelegt ist, ein Warnsignal zur Verfügung zu stellen, wenn der abgefühlte Druck einen vorgegebenen Schwellenwert übersteigt.

12. Digitale Bildaufnahmevorrichtung nach Anspruch 1, wobei der Prozessor ferner ausgelegt ist, den Schritt des Verwendens des abgefühlten Drucks auszuführen, um eine Tiefe zwischen der digitalen Bildaufnahmevorrichtung und der Oberfläche des Wassers zu bestimmen, wenn die digitale Bildaufnahmevorrichtung in der Unterwasserphotographiebetriebsart betrieben wird, und wobei ein Warnsignal für den Anwender bereitgestellt wird, wenn die bestimmte Tiefe einen vorgegebenen Schwellenwert übersteigt.

13. Digitale Bildaufnahmevorrichtung nach Anspruch 1, wobei die digitale Bildaufnahmevorrichtung ausgeschaltet wird, wenn der abgefühlte Druck einen vorgegebenen Schwellenwert übersteigt.

14. Digitale Bildaufnahmevorrichtung nach Anspruch 1, die ferner eine elektronische Blitzbeleuchtungsquelle enthält, und wobei die Blitzbeleuchtung, die von der elektronischen Blitzbeleuchtungsquelle erzeugt wird, in Reaktion darauf eingestellt wird, ob die digitale Bildaufnahmevorrichtung in der Unterwasserphotographiebetriebsart betrieben wird.

15. Digitale Bildaufnahmevorrichtung nach Anspruch 14, wobei die Blitzbeleuchtung durch Einstellen einer korrelierten Farbtemperatur oder eines Beleuchtungsniveaus der Blitzbeleuchtung eingestellt wird.

## Revendications

1. Dispositif de capture d'images numériques destiné à être utilisé pour capturer des images numériques sous-marines, comprenant :

un boîtier étanche à l'eau (280) ;
un capteur d'images (14) servant à capturer une image numérique ;
un système optique (4) servant à former l'image d'une scène sur le capteur d'images ;
un moyen (25) servant à capter une pression à l'extérieur du boîtier étanche à l'eau ;
un microphone sous-marin (24) servant à enregistrer des sons lorsque le dispositif de capture d'images numériques est utilisé sous l'eau ;
un microphone aérien (24) servant à enregistrer des sons lorsque le dispositif de capture d'images numériques n'est pas utilisé sous l'eau ; et
un processeur (20) conçu pour accomplir les étapes consistant à :

déterminer une pression captée ;
capturer (355) une image numérique d'une scène à l'aide du capteur d'images ;
utiliser (310) la pression captée pour déterminer une indication d'une utilisation sous l'eau ou non du dispositif de capture d'images numériques et pour sélectionner en conséquence un mode de photographie sous-marine (320) ou un mode de photographie normale (330) ;
traiter l'image numérique capturée selon le mode de photographie sélectionné ;
sélectionner automatiquement soit le microphone sous-marin, soit le microphone aérien selon que le dispositif de capture d'images numériques est utilisé en mode de photographie sous-marine ou en mode de photographie normale ; et
enregistrer (385) l'image numérique traitée (180) dans une mémoire (30) accessible par le processeur.

**2.** Dispositif de capture d'images numériques selon la revendication 1, dans lequel le processeur est en outre conçu pour accomplir l'étape consistant à associer à l'image numérique enregistrée des métadonnées ayant trait au mode de photographie sélectionné.

**3.** Dispositif de capture d'images numériques selon la revendication 1, dans lequel le processeur est en outre conçu pour accomplir l'étape consistant à associer à l'image numérique enregistrée des métadonnées ayant trait à la pression captée.

**4.** Dispositif de capture d'images numériques selon la revendication 1, dans lequel l'étape consistant à traiter l'image numérique capturée est réglée par réglage d'une reproduction des couleurs de l'image numérique capturée selon le mode de photographie sélectionné.

**5.** Dispositif de capture d'images numériques selon la revendication 4, dans lequel le processeur est en outre conçu pour accomplir l'étape consistant à associer à l'image numérique enregistrée des métadonnées fournissant une indication du module de photographie sélectionné de manière à permettre l'utilisation d'un processeur dans un dispositif informatique externe pour régler la reproduction des couleurs de l'image numérique enregistrée en fonction des métadonnées associées.

**6.** Dispositif de capture d'images numériques selon la revendication 4, dans lequel la reproduction des couleurs de l'image numérique capturée est réglée par application d'une transformation des couleurs sous-marine lorsque le dispositif de capture d'images numériques est utilisé en mode de photographie sous-marine.

**7.** Dispositif de capture d'images numériques selon la revendication 6, dans lequel des caractéristiques de reproduction des couleurs associées à la transformation des couleurs sous-marine sont réglées en fonction de la pression captée.

**8.** Dispositif de capture d'images numériques selon la revendication 6, comportant en outre un moyen servant à déterminer une distance d'objet entre le dispositif de capture d'images numériques et un sujet principal dans la scène, et dans lequel des caractéristiques de reproduction des couleurs associées à la transformation des couleurs sous-marine sont réglées en fonction de la distance d'objet déterminée lorsque le dispositif de capture d'images numériques est utilisé en mode de photographie sous-marine.

**9.** Dispositif de capture d'images numériques selon la revendication 1, dans lequel l'étape consistant à traiter l'image numérique capturée selon le mode de photographie sélectionné comporte l'étape consistant à régler un degré d'amélioration de la netteté appliqué à l'image numérique capturée par un algorithme d'amélioration de la netteté de l'image numérique en fonction du mode de photographie sélectionné.

**10.** Dispositif de capture d'images numériques selon la revendication 1, dans lequel l'étape consistant à traiter l'image numérique capturée selon le mode de photographie sélectionné comporte l'étape consistant à régler un degré de réduction du bruit appliqué à l'image numérique capturée par un algorithme de réduction du bruit en fonction du mode de photographie sélectionné.

**11.** Dispositif de capture d'images numériques selon la revendication 1, conçu pour fournir un signal d'alerte lorsque la pression captée dépasse un seuil prédéfini.

**12.** Dispositif de capture d'images numériques selon la revendication 1, dans lequel le processeur est en outre conçu pour accomplir l'étape consistant à utiliser la pression captée pour déterminer une profondeur entre le dispositif de capture d'images numériques et la surface de l'eau lorsque le dispositif de capture d'images numériques est utilisé en mode de photographie sous-marine, et dans lequel le signal d'alerte est fourni à l'utilisateur lorsque la profondeur déterminée dépasse un seuil prédéfini.

**13.** Dispositif de capture d'images numériques selon la revendication 1, lequel dispositif de capture d'images numériques est mis hors tension lorsque la pression captée dépasse un seuil prédéfini.

**14.** Dispositif de capture d'images numériques selon la revendication 1, comportant en outre une source d'éclairage par flash électronique, et dans lequel l'éclairage par flash produit par la source d'éclairage par flash électronique est réglé en fonction de l'utilisation ou non du dispositif de capture d'images numériques en mode de photographie sous-marine.

**15.** Dispositif de capture d'images numériques selon la revendication 14, dans lequel l'éclairage par flash est réglé par réglage d'une température de couleur corrélée ou d'un niveau d'éclairage de l'éclairage par flash.

**FIG. 1**

EP 2 550 559 B1

**FIG. 2**

*FIG. 3*

**FIG. 4**

EP 2 550 559 B1

**FIG. 5**

EP 2 550 559 B1

*FIG. 6*

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6263792 B, Fredlund
- US 5382499 A, Keelan
- US 5710947 A, Teremy
- US 3971065 A
- US 20070024931 A
- US 6292218 B, Parulski
- US 20080297027 A, Miller
- US 5668597 A

- US 6934056 B, Gindele
- US 5652621 A
- US 4642678 A
- US 5493335 A
- US 5189511 A
- US 6192162 B
- US 4774574 A